# EUROPEAN PATENT APPLICATION

(11) **EP 4 763 510 A1**
(43) Date of publication of application: **24.06.2026**
(21) Application number: 24383393.6
(22) Date of filing: 18.12.2024
(51) Int. Cl.: B32B 7/10, B32B 7/14, B32B 25/04, B32B 25/14, B32B 27/08, B32B 27/16, B32B 27/30, B32B 27/32, C08J 5/18, C08L 23/04

(54) **MULTILAYER STRUCTURE WITH COLD SEAL COMPOSITION**

(71) Applicant: Dow Global Technologies LLC, Midland, MI 48674 (US); Rohm and Haas Company, Collegeville, PA 19426 (US)
(72) Inventor: SAHU, Nrusingh, 43006 Tarragona (ES); BARRETTO, Abraham, 43006 Tarragona (ES); D' IGNOTI, Vincenzo, 22076 Mozzate (IT)
(74) Representative: Boult Wade Tennant LLP

(57) **Abstract**

A multilayer structure is disclosed. The multilayer structure according to embodiments disclosed herein includes a first machine direction oriented film having specific high density and linear low density concentrations. The outer surface of the skin layer can be coated with a metal coating and outer surface of the other skin layer can be corona treated and coated with a cold seal composition. The multilayer structure can be used in packaging for cold seal with a desirable seal strength.

## Description

### FIELD

Embodiments described herein relate to multilayer structures, and in particular, multilayer structures including cold seal compositions.

### INTRODUCTION

Cold seals play a crucial role in food packaging, offering several benefits that make them indispensable in the industry. A primary advantage of a cold seal in food packaging is their ability, when designed correctly, to provide a secure and reliable seal without the need for heat. This is particularly important for packaging heat-sensitive products, such as chocolates and certain pharmaceuticals, where exposure to high temperatures could compromise the integrity and quality of the product. Cold seals use pressure-sensitive and self-seal adhesives that seal at room temperature, ensuring that the packaging process does not affect the product's properties. Moreover, cold seals in polyethylene packaging contribute to the efficiency and sustainability of the packaging process. Since they do not necessarily require heat, they can reduce energy consumption and lower the overall carbon footprint of the packaging operation. This aligns with the growing demand for environmentally friendly packaging solutions. Additionally, cold seals can ensure that the packaged food remains fresh and protected from external contaminants. This is essential for maintaining the shelf life and safety of food products and protecting against food waste, ultimately benefiting both manufacturers and consumers.

Cold seals, commonly used in the food packaging industry, face several challenges. For example, a significant issue is achieving seal strength across different conditions or materials. Variations in temperature and humidity can affect the adhesive properties of cold seals, leading to weaker seals that may compromise the integrity of the packaging. Additionally, cold seals often require precise application techniques to ensure uniform adhesion, which can be difficult to achieve in high-speed production environments. Accordingly, it is necessary to find ways to provide multilayer structures that can be used for packaging and cold sealing and can have desirable performance properties such as seal strength.

### SUMMARY

In a first aspect, a multilayer structure is disclosed. The multilayer structure comprises a first machine direction oriented film comprising a first skin layer comprising less than 40 wt.% of a high density polyethylene having a density of at least 0.950 g/cc and at least 60 wt.% of a linear low density polyethylene having a density of less than 0.925 g/cc, based on the total weight of the first skin layer; one or more core layers comprising a polyethylene having a density in the range of 0.935 to 0.950 g/cc; and a second skin layer comprising at least 50 wt.% of a high density polyethylene having a density of at least 0.950 g/cc and less than 50 wt.% of a linear low density polyethylene having a density less than 0.925 g/cc, based on the total weight of the second skin layer; a metal coating, wherein the metal coating is disposed on an outer surface of the first skin layer; and a cold seal composition, wherein an outer surface of the second skin layer is corona treated and the cold seal composition is disposed on the outer surface of the second skin layer

In a second aspect, a process for making a multilayer structure is disclosed. The process for making a multilayer structure comprising: extruding a first machine direction oriented film comprising a first skin layer comprising less than 40 wt.% of a high density polyethylene having a density of at least 0.950 g/cc and at least 60 wt.% of a linear low density polyethylene having a density of less than 0.925 g/cc, based on the total weight of the first skin layer; one or more core layers comprising a polyethylene having a density in the range of 0.935 to 0.950 g/cc; and a second skin layer comprising at least 50 wt.% of a high density polyethylene having a density of at least 0.950 g/cc and less than 50 wt.% of a linear low density polyethylene having a density less than 0.925 g/cc, based on the total weight of the second skin layer; disposing a metal coating on an outer surface of the first skin layer; corona treating the second skin layer; and disposing a cold seal composition on an outer surface of the second skin layer.

### DETAILED DESCRIPTION

As used herein, the terms "polyethylene" or "ethylene-based polymer" shall mean polymers comprising a majority amount (>50 mol %) of units which have been derived from ethylene monomer. This includes polyethylene homopolymers and copolymers (meaning units derived from two or more comonomers). The terms "ethylene-based polymer" and "polyethylene" may be used interchangeably. Generally, polyethylene may be produced in gas-phase, fluidized bed reactors, liquid phase slurry process reactors, or liquid phase solution process reactors, using a heterogeneous catalyst system, such as Ziegler-Natta catalyst, a homogeneous catalyst system, comprising Group 4 transition metals and ligand structures such as metallocene, non-metallocene metal-centered, heteroaryl, heterovalent aryloxyether, phosphinimine, and others. Combinations of heterogeneous and/or homogeneous catalysts also may be used in either single reactor or dual reactor configurations.

Common forms of polyethylene known in the art include Low Density Polyethylene (LDPE); Linear Low Density Polyethylene (LLDPE); Ultra Low Density Polyethylene (ULDPE); Very Low Density Polyethylene (VLDPE); single-site catalyzed Linear Low Density Polyethylene, including both linear and substantially linear low density resins (m-LLDPE); ethylene-based plastomers (POP) and ethylene-based elastomers (POE); Medium Density Polyethylene (MDPE); and High Density Polyethylene (HDPE). These polyethylene materials are generally known in the art; however, the following descriptions may be helpful in understanding the differences between some of these different polyethylene resins.

As used herein, the term "linear low density polyethylene" or "LLDPE", includes resin made using the traditional Ziegler-Natta catalyst systems and chromium-based catalyst systems as well as single-site catalysts, including, but not limited to, substituted mono- or bis-cyclopentadienyl catalysts (typically referred to as metallocene), constrained geometry catalysts, phosphinimine catalysts & polyvalent aryloxyether catalysts (typically referred to as bisphenyl phenoxy), and includes linear, substantially linear or heterogeneous polyethylene copolymers or homopolymers. LLDPEs contain less long chain branching than LDPEs and includes the substantially linear ethylene polymers which are further defined in U.S. Patent 5,272,236, U.S. Patent 5,278,272, U.S. Patent 5,582,923 and US Patent 5,733,155; the homogeneously branched linear ethylene polymer compositions such as those in U.S. Patent No. 3,645,992; the heterogeneously branched ethylene polymers such as those prepared according to the process disclosed in U.S. Patent No. 4,076,698; and/or blends thereof (such as those disclosed in US 3,914,342 or US 5,854,045). The LLDPEs can be made via gas-phase, solution-phase or slurry polymerization or any combination thereof, using any type of reactor or reactor configuration known in the art. The LLDPE, as used herein, have a density in the range of 0.900 to 0.935 g/cc.

The term "low density polyethylene" or "LDPE" as used herein refers to as "high pressure ethylene polymer" or "highly branched polyethylene" and is defined to mean that the polymer is partly or entirely homo-polymerized or copolymerized in autoclave or tubular reactors at pressures above 14,500 psi (100 MPa) with the use of free-radical initiators, such as peroxides (see for example US 4,599,392, which is hereby incorporated by reference). The LDPE have a density in the range of 0.915 to 0.930 g/cm³.

The terms "high density polyethylene" or "HDPE" refers to polyethylenes having densities greater than about 0.935 g/cm³ and up to about 0.980 g/cm³, which are generally prepared with Ziegler-Natta catalysts, chrome catalysts, or single-site catalysts including, but not limited to, substituted mono- or bis-cyclopentadienyl catalysts (typically referred to as metallocene), constrained geometry catalysts, phosphinimine catalysts and polyvalent aryloxyether catalysts (typically referred to as bisphenyl phenoxy).

The term, "polyolefin plastomer," refers to a polyethylene plastomer or a polypropylene plastomer, where the polymer is made using single-site catalyst such as metallocenes and constrained geometry catalysts, and has a density of 0.885 to 0.915 g/cc.

The terms "comprising," "including," "having," and their derivatives, are not intended to exclude the presence of any additional component, step or procedure, whether or not the same is specifically disclosed. In order to avoid any doubt, all compositions claimed through use of the term "comprising" may include any additional additive, adjuvant, or compound, whether polymeric or otherwise, unless stated to the contrary. In contrast, the term, "consisting essentially of" excludes from the scope of any succeeding recitation any other component, step or procedure, excepting those that are not essential to operability. The term "consisting of" excludes any component, step or procedure not specifically delineated or listed.

Disclosed herein are multilayer structures. The multilayer structure comprises a first machine direction oriented film comprising a first skin layer, one or more core layers, and a second skin layer. The multilayer structure comprises a metal coating, wherein the metal coating is disposed on an outer surface of the first skin layer. The multilayer structure comprises a cold seal composition, wherein an outer surface of the second skin layer is corona treated and the cold seal composition is disposed on the outer surface of the second skin layer. A "cold seal composition," as that term is used herein, is a composition that can seal to itself and can form a seal without the need for the presence of heat to form the seal. Corona treatments of polyethylene films are well known in the art. For example, a corona treatment can be provided where a treatment the film is exposed to a corona discharge atmosphere generated in a gas in an atmospheric pressure atmosphere, or ions generated by the discharge collide with the film. Without being bound by theory, the structure of the metallized first MDO along with the cold seal composition and corona treatment gives rise to desirable benefits, including strong seal strength with cold seal.

In some embodiments, the multilayer structure comprises a second machine direction oriented film. In such embodiments, the second machine direction oriented film can comprise a first skin layer, one or more core layers, and a second skin layer. The second skin layer of the second machine direction oriented film can be laminated to the metal coating on the outer surface of the first skin layer of the first machine direction oriented film. The second skin layer of the second machine direction oriented film can be laminated to the metal coating via an adhesive layer. The adhesive layer can be a layer of a solvent free adhesive. Machine direction oriented films are well known to those of ordinary skill in the art. The machine direction oriented films disclosed herein can be stretched at ratio of at least 4:1 and at a temperature greater than 95°C.

### First Machine Direction Oriented Film

The first machine direction oriented film comprises a first skin layer comprising less than 40 wt.% of a high density polyethylene having a density of at least 0.950 g/cc and at least 60 wt.*%* of a linear low density polyethylene having a density of less than 0.925 g/cc, based on the total weight of the first skin layer; one or more core layers comprising a polyethylene having a density in the range of 0.935 to 0.950 g/cc; and a second skin layer comprising at least 50 wt.% of a high density polyethylene having a density of at least 0.950 g/cc and less than 50 wt.% of a linear low density polyethylene having a density less than 0.925 g/cc, based on the total weight of the second skin layer.

The HDPE of the first skin layer can have a density of at least 0.950 g/cc, at least 0.955 g/cc, at least 0.960 g/cc, at least 0.962 g/cc, at least 0.964 g/cc, at least 0.966 g/cc, or at least 0.968 g/cc. The HDPE of the first skin layer can have a melt index (I₂) of less than 10.0 g/10 min, less than 7.5 g/10 min, or less than 5.0 g/10 min, or less than 3.0 g/10 min. The LLDPE of the first skin layer can have a density of less than 0.925 g/cc, less than 0.920 g/cc, less than 0.918 g/cc, less than 0.916 g/cc, or less than 0.914 g/cc, or in a range of from 0.905 g/cc to 0.925 g/cc. The LLDPE of the first skin layer can have a melt index (I₂) of less than 4.0 g/10 min, less than 3.0 g/10 min, less than 2.0 g/10 min, or from 0.1 to 4.0 g/10 min. The first skin layer can comprise 5 to 25 wt.% of the LLDPE, or can comprise from 75 to 95 wt.% of the HDPE, based on the total weight of the first skin layer.

The first machine direction oriented film comprises one or more core layers comprising a polyethylene having a density in the range of 0.935 to 0.950 g/cc. The first MDO film can comprise one, two, three, four, five, six, seven, eight, or nine core layers. The term "core layer" means that the film layer is not an outer or skin layer of the film. The polyethylene of the one or more core layer can be an HDPE having a density in the range of 0.935 to 0.950 g/cc. The one or more core layer can comprise at least 50%, at least 60%, at least 70%, or at least 75 % of the total thickness of the first MDO film.

The second skin layer comprises at least 50 wt.% of a high density polyethylene having a density of at least 0.950 g/cc and less than 50 wt.% of a linear low density polyethylene having a density less than 0.925 g/cc, based on the total weight of the second skin layer. The HDPE of the second skin layer can be the same type or a different type than the HDPE of the first skin layer. The HDPE of the second skin layer can have a density of at least 0.950 g/cc, at least 0.955 g/cc, at least 0.960 g/cc, at least 0.962 g/cc, at least 0.964 g/cc, at least 0.966 g/cc, or at least 0.968 g/cc. The LLDPE of the second skin layer can be the same type or a different type than the LLDPE of the second skin layer. The LLDPE can have a density of less than 0.925 g/cc, less than 0.922 g/cc, less than 0.920 g/cc, less than 0.918 g/cc, or in the range of 0.900 to 0.925 g/cc, or 0.910 g/cc to 0.925 g/cc. The second skin layer can comprise 55 to 95 wt.%, or 60 to 90 wt.*%*, of the HDPE and can comprise 5 to 45 wt.*%* or 10 to 40 wt.*%* of the LLDPE, based on the total weight of the second skin layer. The outer surface of the second skin layer is corona treated. Corona treatment is known to those skilled in art and can be carried out by known methods. The concentration of the HDPEs and LLDPEs in the first and second skin layer as well as the composition of the one or more core layers can contribute to desirable mechanical properties for packaging, as well as desirable performance for metal adhesion and cold sealing for the multilayer structure as shown herein.

The first machine direction oriented film can comprise at least 95 wt.%, at least 96 wt.%, at least 97 wt.%, at least 98 wt.%, or at least 99 wt.% ethylene-based polymers, based on the total weight of the first machine direction oriented film. The amount of ethylene-based polymer can assist with the recyclability of the first machine direction oriented film and multilayer structure. Structures made of similar or a single type of material such as ethylene-based polymers can be easier to recycle. The first machine direction oriented film can have a thickness, after orientation, of less than 100 microns, less than 75 microns, less than 50 microns, or less than 35 microns, or in the range of from 5 to 100 microns, or 10 to 75 microns, or 15 to 50 microns, or 15 to 35 microns. Without being bound by theory, the structure disclosed herein can be downgauged to use less material without compromising performance on cold seal strength and mechanical performance desirable for packaging.

### Metal Coating

The multilayer structure comprises a metal coating, wherein the metal coating is disposed on an outer surface of the first skin layer. The outer surface of the first skin layer can be metallized by any known method for metallizing polyethylene films. For example, the metal layer can be applied using vacuum metallization. This can include providing a metal source and evaporating it in a vacuum environment causing it to condense on the surface of the film. The metal can be deposited on the skin layer to form the metal coating on the outer surface. Suitable metals include Al, Zn, Au, Ag, Cu, Ni, Cr, Ge, Se, Ti, Sn, or oxides thereof. The metal layer can be formed from aluminum or aluminum oxide (Al₂O₃) in some embodiments.

### Cold Seal Composition

The multilayer structure comprises a cold seal composition. Cold seal compositions are generally known by those skilled in the art. A cold seal composition in food packaging applications can be made of various materials, often involving a combination of natural or synthetic rubber latex, acrylic polymers, tackifiers, stabilizers, anti-oxidants, and other compounds. In some embodiments, the cold seal composition comprises, consists essentially of, or consists of a styrene-butadiene-latex binder, an acrylic-water based binder, and/or a styrene-acrylic binder. The cold seal composition can comprise at least 30 wt.% of a styrene-butadiene latex binder, at least 30 wt.% of an acrylic water based binder, and at least 5 wt.% of a styrene-acrylic binder. The cold seal composition can comprise between 30 to 70 wt.% styrene-butadiene latex binder, between 30 to 70 wt.% acrylic water based binder, and between 0 to 40 wt.% of a styrene-acrylic binder, based on the total weight of the cold seal composition. For example, a cold seal composition may include a mix of LIGOS 3210.01 (styrene-butadiene latex binder), ROBOND^{™} L 37 (acrylic water based binder), and PRIMAL^{™} P-376LO (styrene-acrylic binder). The cold seal composition can be applied as a registered coating (e.g., a partial coating of a package) or to an entire surface. The cold seal composition can be disposed on the outer surface in an amount of at least 1.5 gsm, at least 2.0 gsm, at least 2.5 gsm, at least 3.0 gsm, or less than 6.0 gsm, or less than 5.0 gsm, or less than 4.0 gsm, or ranges in between.

### Second Machine Direction Oriented Film

The multilayer structure can further comprise a second machine direction oriented film comprising a first skin layer, one or more core layers, and a second skin layer, wherein the first skin layer comprises from 50 to 70 wt.% of a linear low density polyethylene having a density of in the range of 0.910 g/cc to 0.930 g/cc and from 30 wt.% to 50 wt.% of a polyethylene having a density of from 0.890 g/cc to 0.910 g/cc, based on the total weight of the first skin layer; and the second skin layer comprises a high density polyethylene and a linear low density polyethylene, wherein the second skin layer of the second machine direction oriented film is laminated via an adhesive layer to the metal coating on the outer surface of the first skin layer of the first machine direction oriented film.

The first skin layer can comprise from 50 to 70 wt.% of a linear low density polyethylene having a density of in the range of 0.910 g/cc to 0.930 g/cc and from 30 wt.% to 50 wt.% of a polyethylene having a density of from 0.890 g/cc to 0.910 g/cc. The LLDPE of the first skin layer of the second MDO film can be the same type or different type of LLDPE as the LLDPE of the first skin layer of the first MDO film. The polyethylene of the first skin layer of the second MDO film can have a melt index (I2) of less than 10.0 g/10 min, less than 5.0 g/10 min, or less than 2.0 g/10 min.

The second skin layer can comprise a high density polyethylene and a linear low density polyethylene. The HDPE of the second skin layer of the second MDO film can be the same or different type of HDPE as in the second skin layer of the first MDO film. Likewise, the LLDPE of the second skin layer of the second MDO film can be the same or different type of LLDPE as in the first skin layer of the first MDO film. The second skin layer of the second machine direction oriented film, in some embodiments, is laminated via an adhesive layer to the metal coating on the outer surface of the first skin layer of the first machine direction oriented film. The adhesive layer can comprise a solvent-based adhesive or can comprise a solvent free adhesive. In some embodiments, the adhesive layer is a layer of a solvent free adhesive.

The second machine direction oriented film can comprise at least 95 wt.% ethylene-based polymers, at least 97 wt.% ethylene-based polymers, at least 98 wt.% ethylene-based polymers, or at least 99 wt.% ethylene-based polymers, based on the total weight of the second machine direction oriented film. The second machine direction oriented film can have a thickness, after orientation, of less than 100 microns, less than 75 microns, less than 50 microns, or less than 35 microns, or in the range of from 5 to 100 microns, or 10 to 75 microns, or 15 to 50 microns, or 15 to 35 microns.

In some embodiments, a seal formed by the cold seal composition having seal strength as determined in accordance with the test methods below of greater than 3.0 N/15 mm, or greater than 3.5 N/15 mm, or greater than 3.7 N/15 mm. In some embodiments, the multilayer structure has a thickness between 25 to 500 microns, or between 25 to 300 microns, or between 25 to 250 microns, or between 25 and 100 microns.

### Methods of Preparing Multilayer Structures

Machine direction oriented films can be formed using techniques known to those of skill in the art based on the teachings herein. For example, layers can be coextruded as blown films or cast films using techniques known to those of skill in the art based on the teachings herein and can be subsequently oriented. In some embodiments, multilayer films may comprise a plurality of layers that are coextruded and then laminated to one or more additional layers. In such embodiments, a facial surface of the coextruded film can be laminated to a facial surface of another film layer using techniques known to those of skill in the art based on the teachings herein.

Multilayer structures of the present invention can be used as part of a package. Such packages can be formed from a polyethylene. Examples of such packages can include flexible packages, pouches, stand-up pouches, and pre-made packages or pouches. Such packages can be formed using techniques known to those of skill in the art based on the teachings herein and based on the particular use for the package (e.g., type of food, amount of food, etc.).

A process for making a multilayer structure comprises extruding a first machine direction oriented film comprising a first skin layer comprising less than 40 wt.% of a high density polyethylene having a density of at least 0.950 g/cc and at least 60 wt.% of a linear low density polyethylene having a density of less than 0.925 g/cc, based on the total weight of the first skin layer; one or more core layers comprising a polyethylene having a density in the range of 0.935 to 0.950 g/cc; and a second skin layer comprising at least 50 wt.% of a high density polyethylene having a density of at least 0.950 g/cc and less than 50 wt.% of a linear low density polyethylene having a density less than 0.925 g/cc, based on the total weight of the second skin layer; disposing a metal coating on an outer surface of the first skin layer; corona treating the second skin layer; and disposing a cold seal composition on an outer surface of the second skin layer. The process can further include extruding a second machine direction oriented film comprising a first skin layer, one or more core layers, and a second skin layer, wherein the first skin layer comprises from 50 to 70 wt.% of a linear low density polyethylene having a density of in the range of 0.910 g/cc to 0.930 g/cc and from 30 wt.% to 50 wt.% of a polyethylene having a density of from 0.890 g/cc to 0.910 g/cc; and the second skin layer comprises a high density polyethylene and a linear low density polyethylene, and laminating the second skin layer of the second machine direction oriented film via an adhesive layer to the metal coating on the outer surface of the first skin layer of the first machine direction oriented film.

### Additives

The multilayer structures may further comprise one or more additives. Additives are optionally included in the first skin layer, second skin layer, and/or one or more core layers of the multilayer films. Additives are well within the skill in the art. Such additives include, for instance, stabilizers including free radical inhibitors and ultraviolet wave (UV) stabilizers, neutralizes, nucleating agents, slip agents, antiblock agents, pigments, antistatic agents, clarifiers, waxes, resins, fillers such as silica and carbon black and other additives within the skill in the art used in combination or alone. Effective amounts are known in the art and depend on parameters of the polymers in the composition and conditions to which they are exposed.

### Aspects

Aspect 1 - A multilayer structure comprising:
a first machine direction oriented film comprising a first skin layer comprising less than 40 wt.% of a high density polyethylene having a density of at least 0.950 g/cc and at least 60 wt.% of a linear low density polyethylene having a density of less than 0.925 g/cc, based on the total weight of the first skin layer; one or more core layers comprising a polyethylene having a density in the range of 0.935 to 0.950 g/cc; and a second skin layer comprising at least 50 wt.% of a high density polyethylene having a density of at least 0.950 g/cc and less than 50 wt.% of a linear low density polyethylene having a density less than 0.925 g/cc, based on the total weight of the second skin layer;
a metal coating, wherein the metal coating is disposed on an outer surface of the first skin layer; and
a cold seal composition, wherein an outer surface of the second skin layer is corona treated and the cold seal composition is disposed on the outer surface of the second skin layer.

Aspect 2 - The multilayer structure of aspect 1, wherein the multilayer structure further comprises a second machine direction oriented film comprising a first skin layer, one or more core layers, and a second skin layer, wherein the first skin layer comprises from 50 to 70 wt.% of a linear low density polyethylene having a density of in the range of 0.910 g/cc to 0.930 g/cc and from 30 wt.% to 50 wt.% of a polyethylene having a density of from 0.890 g/cc to 0.910 g/cc; and the second skin layer comprises a high density polyethylene and a linear low density polyethylene, wherein the second skin layer of the second machine direction oriented film is laminated via an adhesive layer to the metal coating on the outer surface of the first skin layer of the first machine direction oriented film.

Aspect 3 - The multilayer structure of any one of the preceding aspects, wherein the cold seal composition is disposed on the outer surface in an amount of at least 1.5 gsm.

Aspect 4 - The multilayer structure of any one of the preceding aspects, wherein the adhesive layer is a layer of a solvent free adhesive.

Aspect 5 - The multilayer structure of any one of the preceding aspects, wherein the cold seal composition comprises a styrene-butadiene-latex binder, acrylic-water based binder, and styrene-acrylic binder.

Aspect 6 - The multilayer structure of any one of the preceding aspects, wherein the first machine direction oriented film has a thickness of less than 100 microns.

Aspect 7 - The multilayer structure of any one of the preceding aspects, wherein the first machine direction oriented film comprises at least 95 wt.% ethylene-based polymers, based on the total weight of the first machine direction oriented film.

Aspect 8 - The multilayer structure of any one of the preceding aspects, wherein the second machine direction oriented film comprises at least 95 wt.% ethylene-based polymers, based on the total weight of the second machine direction oriented film.

Aspect 9 - The multilayer structure of any one of the preceding aspects, wherein a seal formed by the cold seal composition has seal strength as determined in accordance with the description of greater than 3.0 N/15 mm at 1 day.

Aspect 10 - The multilayer structure of any one of the preceding aspects, wherein the structure has a thickness between 50 to 200 microns.

Apsect 11 - A process for making a multilayer structure comprising:
extruding a first machine direction oriented film comprising a first skin layer comprising less than 40 wt.% of a high density polyethylene having a density of at least 0.950 g/cc and at least 60 wt.% of a linear low density polyethylene having a density of less than 0.925 g/cc, based on the total weight of the first skin layer; one or more core layers comprising a polyethylene having a density in the range of 0.935 to 0.950 g/cc; and a second skin layer comprising at least 50 wt.% of a high density polyethylene having a density of at least 0.950 g/cc and less than 50 wt.% of a linear low density polyethylene having a density less than 0.925 g/cc, based on the total weight of the second skin layer;
disposing a metal coating on an outer surface of the first skin layer;
corona treating the second skin layer; and
disposing a cold seal composition on an outer surface of the second skin layer.

### TEST METHODS

### Density

Density is measured according to ASTM D792, Method B in reported in grams/cubic centimeter (g/cc or g/cm³).

### Melt Index

Melt index (I₂), or I2, is measured in accordance with ASTM D1238, Conditions 190 °C/2.16 kg, Procedure B; and the I2 value is reported in grams eluted per 10 minutes (g/10 min).

### Seal Strength Test

The cold seals are sealed to themselves and tested in accordance with ASTM: F88/F88M - 21 Standard Test Method for Seal Strength of Flexible Barrier Materials. Units are reported in N/25 mm.

### EXAMPLES

The ethylene-based polymers in Table 1, as well as the adhesive and cold seal composition are used in the examples. The polymers are commercially available from The Dow Chemical Company (Dow).

**Table 1: Raw Materials**

| | **Density, g/cc** | **Type** | **I2, g/10min** | **Supplier** |
|---|---|---|---|---|
| ELITE^{™} AT 6900 | 0.969 | HDPE | 1.2 | DOW |
| ELITE^{™} 5940ST | 0.941 | HDPE | 0.8 | DOW |
| ELITE^{™} 5400GT | 0.918 | LLDPE | 1.0 | DOW |
| ELITE^{™} 5400GS | 0.916 | LLDPE | 1.6 | DOW |
| ELITE^{™} 5960G1 | 0.962 | HDPE | 0.85 | DOW |
| XZ 89810.00 | 0.902 | Plastomer | 1.0 | DOW |
| ELITE^{™} AT 6410 | 0.912 | Plastomer | 0.85 | DOW |

**Table 2: Cold Seal & Adhesive**

| | **Commercial Name** | **Supplier** |
|---|---|---|
| L plus 1 / CR 84 | Solvent free adhesive (Laminating adhesive 100:45 ratio) | **Dow** |
| LIGOS 3210.01 | Styrene butadiene latex binder | **Trinseo** |
| ROBOND^{™} L 37 | Acrylic water-based binder | **Dow** |
| PRIMAL^{™} P 376LO | Styrene- Acrylic binder. | **Dow** |
| | | |
| **Cold Seal Composition** | LIGOS 3210.01/ROBOND L 37/PRIMAL P 376LO Ratio 50/40/10 (PP23066) | |

The first and second MDO films are produced on a blown film MDO line. The first MDO film is produced in a 9-layer blown film with inline MDO (machine direction oriented) stretching 5.3 times and stretching temperature 105°C used for stretching. The second MDO film is produced in a 5-layer blown film line with inline MDO stretching 5.4 times and 105°C used for stretching the second MDO PE film. A metal coating is disposed on an outer surface of the first skin layer. The metallization is conducted with an industrial metallization machine (Machine type K5 EXPERT, BOBST Company) with OD=2.80. The outer surface of the second skin layer is corona treated and then the cold seal coating is applied. Structures are formed as shown in Table 5 via the laminating adhesive, and cold seals are formed with the cold seal coating on itself for testing with results in Table 6. The first MDO film is labeled "MET MDO" and second MDO film is labeled "MDO PE" where both are 25 micrometers (µm). The amount of cold seal applied is not in GSM in Table 5.

**Table 3: First MDO Film (wt. %)**

| | **1^{st} Skin** | **Core** | **Core** | **Core** | **Core** | **Core** | **Core** | **Core** | **2^{nd} Skin** |
|---|---|---|---|---|---|---|---|---|---|
| ELITE AT 6410 | 84% | 0% | 0% | 0% | 0% | 0% | 0% | 0% | 30% |
| ELITE AT 6900 | 15% | 30% | 30% | 0% | 0% | 0% | 30% | 30% | 69% |
| ELITE 5940ST | 0% | 70% | 70% | 100% | 100% | 100% | 70% | 70% | 0% |
| PPA | 1% | 0% | 0% | 0% | 0% | 0% | 0% | 0% | 1% |
| Layer Ratio-*%* | 14 | 10 | 11 | 10 | 10 | 10 | 11 | 13.5 | 10.5 |

**Table 4: Second MDO Film (wt. %)**

| Particulars | **1^{st} Skin** | **Core** | **Core** | **Core** | **2^{nd} Skin** |
|---|---|---|---|---|---|
| ELITE 5960G1 | 0% | 0% | 0% | 0% | 74% |
| ELITE 5940ST | 0% | 97% | 70% | 70% | 0% |
| ELITE 5401GT | 56% | 0% | 0% | 0% | 0% |
| ELITE 5400GS | 0% | 0% | 30% | 30% | 25% |
| XZ 89810.00 | 40% | 0% | 0% | 0% | 0% |
| SLIP ADDITIVE | 3% | 3% | 0% | 0% | 0% |
| PPA | 1% | 0% | 0% | 0% | 1% |
| Layer Ratio-% | 16 | 20 | 28 | 20 | 16 |

**Table 5: Structures**

| **Example** | **Structure** | **Adhesive** | **Cold Seal** |
|---|---|---|---|
| **Inventive 1** | 25µm MDO PE/ Adhesive / (metallize side) 25µm MET MDO/Cold Seal (GSM 1.8) | L plus 1 / CR 84 - Mix ratio: 100 / 45 | LIGOS 3210.01/ROBOND L 37/PRIMAL P 376LO 50/40/10 (PP23066) + Corona Treatment |
| **Inventive 2** | 25µm MDO PE/ Adhesive / (metallize side) 25µm MET MDO/Cold Seal (GSM 4.0) | L plus 1 / CR 84 - Mix ratio: 100 / 45 | LIGOS 3210.01/ROBOND L 37/PRIMAL P 376LO 50/40/10 (PP23066) + Corona Treatment |
| **Inventive 3** | 25µm MDO PE/ Adhesive / (metallize side) 25µm MET MDO/Cold Seal (GSM 3.6) | L plus 1 / CR 84 - Mix ratio: 100 / 45 | LIGOS 3210.01/ROBOND L 37/PRIMAL P 376LO 50/40/10 (PP23066) + Corona Treatment |
| **Inventive 4** | 25µm MDO PE/ Adhesive / (metallize side) 25µm MET MDO/Cold Seal (GSM 3.6) | L plus 1 / CR 84 - Mix ratio: 100 / 45 | LIGOS 3210.01/ROBOND L 37/PRIMAL P 376LO 50/40/10 (PP23066) + Corona Treatment |
| Comparative 1 | 25µm MDO PE/ Adhesive / (metallize side) 25µm MET MDO/Cold Seal (GSM 1.8) | L plus 1 / CR 84 - Mix ratio: 100 / 45 | LIGOS 3210.01/ROBOND L 37/PRIMAL P 376LO 50/40/10 (PP23066) + No Corona Treatment |
| Comparative 2 | 25µm MDO PE/ Adhesive / (metallize side) 25µm MET MDO/Cold Seal(GSM 4.0) | L plus 1 / CR 84 - Mix ratio: 100 / 45 | LIGOS 3210.01/ROBOND L 37/PRIMAL P 376LO 50/40/10 (PP23066) + No Corona Treatment |
| Comparative 3 | 25µm MDO PE/ Adhesive / (metallize side) 25µm MET MDO/Cold Seal (GSM 3.6) | L plus 1 / CR 84 - Mix ratio: 100 / 45 | LIGOS 3210.01/ROBOND L 37/PRIMAL P 376LO 50/40/10 (PP23066) + No Corona Treatment |
| Comparative 4 | 25µm MDO PE/ Adhesive / (metallize side) 25µm MET MDO/Cold Seal (GSM 3.6) | L plus 1 / CR 84 - Mix ratio: 100 / 45 | LIGOS 3210.01/ROBOND L 37/PRIMAL P 376LO 50/40/10 (PP23066) + No Corona Treatment |

**Table 6: Cold Seal After 1 Day, After 1 Day Deep-Freeze (-20°C), and After 7 Days in N/25mm.**

| | **1 Day** | **1 Day Deep Freeze** | **After 7 Days** |
|---|---|---|---|
| ***Inventive Example 1*** | 3.9 | 4.1 | 4.0 |
| ***Inventive Example 2*** | 5.3 | 5.4 | 6.0 |
| ***Inventive Example 3*** | 4.2 | 5.0 | 6.1 |
| ***Inventive Example 4*** | 5.2 | 5.9 | 5.3 |
| ***Comparative Example 1*** | 0.0 | 0.0 | 0.0 |
| ***Comparative Example 2*** | 0.0 | 0.0 | 0.0 |
| ***Comparative Example 3*** | 2.0 | 1.55 | 1.7 |
| ***Comparative Example 4*** | 1.25 | 0.6 | 0.5 |

## Claims

1. A multilayer structure comprising:
a first machine direction oriented film comprising a first skin layer comprising less than 40 wt.% of a high density polyethylene having a density of at least 0.950 g/cc and at least 60 wt.% of a linear low density polyethylene having a density of less than 0.925 g/cc, based on the total weight of the first skin layer; one or more core layers comprising a polyethylene having a density in the range of 0.935 to 0.950 g/cc; and a second skin layer comprising at least 50 wt.% of a high density polyethylene having a density of at least 0.950 g/cc and less than 50 wt.% of a linear low density polyethylene having a density less than 0.925 g/cc, based on the total weight of the second skin layer;
a metal coating, wherein the metal coating is disposed on an outer surface of the first skin layer; and
a cold seal composition, wherein an outer surface of the second skin layer is corona treated and the cold seal composition is disposed on the outer surface of the second skin layer.

2. The multilayer structure of claim 1, wherein the multilayer structure further comprises a second machine direction oriented film comprising a first skin layer, one or more core layers, and a second skin layer, wherein the first skin layer comprises from 50 to 70 wt.% of a linear low density polyethylene having a density of in the range of 0.910 g/cc to 0.930 g/cc and from 30 wt.% to 50 wt.% of a polyethylene having a density of from 0.890 g/cc to 0.910 g/cc; and the second skin layer comprises a high density polyethylene and a linear low density polyethylene, wherein the second skin layer of the second machine direction oriented film is laminated via an adhesive layer to the metal coating on the outer surface of the first skin layer of the first machine direction oriented film.

3. The multilayer structure of any one of the preceding claims, wherein the cold seal composition is disposed on the outer surface in an amount of at least 1.5 gsm.

4. The multilayer structure of any one of the preceding claims, wherein the adhesive layer is a layer of a solvent free adhesive.

5. The multilayer structure of any one of the preceding claims, wherein the cold seal composition comprises a styrene-butadiene-latex binder, acrylic-water based binder, and styrene-acrylic binder.

6. The multilayer structure of any one of the preceding claims, wherein the first machine direction oriented film has a thickness of less than 100 microns.

7. The multilayer structure of any one of the preceding claims, wherein the first machine direction oriented film comprises at least 95 wt.% ethylene-based polymers, based on the total weight of the first machine direction oriented film.

8. The multilayer structure of any one of the preceding claims, wherein the second machine direction oriented film comprises at least 95 wt.% ethylene-based polymers, based on the total weight of the second machine direction oriented film.

9. The multilayer structure of any one of the preceding claims, wherein a seal formed by the cold seal composition has seal strength as determined in accordance with the description of greater than 3.0 N/15 mm at 1 day.

10. The multilayer structure of any one of the preceding claims, wherein the structure has a thickness between 50 to 200 microns.

11. A process for making a multilayer structure comprising:
extruding a first machine direction oriented film comprising a first skin layer comprising less than 40 wt.% of a high density polyethylene having a density of at least 0.950 g/cc and at least 60 wt.% of a linear low density polyethylene having a density of less than 0.925 g/cc, based on the total weight of the first skin layer; one or more core layers comprising a polyethylene having a density in the range of 0.935 to 0.950 g/cc; and a second skin layer comprising at least 50 wt.% of a high density polyethylene having a density of at least 0.950 g/cc and less than 50 wt.% of a linear low density polyethylene having a density less than 0.925 g/cc, based on the total weight of the second skin layer;
disposing a metal coating on an outer surface of the first skin layer;
corona treating the second skin layer; and
disposing a cold seal composition on an outer surface of the second skin layer.
